(19) **Europäisches Patentamt**
**European Patent Office**
**Office européen des brevets**

(11) **EP 4 703 163 A1**

(12) **EUROPÄISCHE PATENTANMELDUNG**

(43) Veröffentlichungstag:
04.03.2026  Patentblatt 2026/10

(51) Internationale Patentklassifikation (IPC):
**B60H 1/32** (2006.01)

(21) Anmeldenummer: 25190056.9

(22) Anmeldetag: **17.07.2025**

(52) Gemeinsame Patentklassifikation (CPC):
**B60H 1/3213;** B60H 2001/325; B60H 2001/3257;
B60H 2001/3285

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **26.08.2024  DE 102024124252**

(71) Anmelder: **AUDI AG**
**85057 Ingolstadt (DE)**

(72) Erfinder:
• **Cherchi, Julian**
**85131 Pollenfeld (DE)**
• **Parzinger, Stephan**
**85123 Karlskron (DE)**

(54) **VERFAHREN ZUM BETREIBEN EINER KÄLTEANLAGE MIT WÄRMEPUMPENFUNKTION FÜR EIN KRAFTFAHRZEUG BASIEREND AUF DEM KÄLTEMITTELMASSENSTROM UND TEILMASSENSTRÖMEN**

(57) Beschrieben wird ein Verfahren (500) zum Betreiben einer Kälteanlage (10) mit Wärmepumpenfunktion für ein Kraftfahrzeug (200) mit zumindest teilweise elektrischem Antrieb, wobei die Kälteanlage (10) aufweist: einen Kältemittelverdichter (12); einen ersten Wärmeübertrager (18); wenigstens einen weiteren Wärmeübertrager (22; 28;26); eine niederdruckseitig stromaufwärts von dem Kältemittelverdichter (12) angeordnete Sensorvorrichtung (pT2) zur Erfassung von einem ersten Kältemitteldruck und/oder einer ersten Kältemitteltemperatur; eine hochdruckseitig stromabwärts von dem Kältemittelverdichter (12) angeordnete Sensorvorrichtung (pT1) zur Erfassung von einem zweiten Kältemitteldruck und/oder einer zweiten Kältemitteltemperatur, wobei das Verfahren folgende Schritte aufweist: Erfassen (S501) des ersten Kältemitteldrucks oder/und der ersten Kältemitteltemperatur; Erfassen (S502) des zweiten Kältemitteldrucks oder/und der zweiten Kältemitteltemperatur; Erfassen (S503) einer Drehzahl des Kältemittelverdichters; Bestimmen (S504) eines Kältemittelliefergrads basierend auf dem Druckverhältnis von ersten Kältemitteldruck und zweiten Kältemitteldruck und der Drehzahl des Kältemittelverdichters; Bestimmen (S505) eines Kältemittelmassenstroms basierend auf dem Kältemittelliefergrad.

Fig. 1

**(Forts. nächste Seite)**

**Fig. 2**

500

```
┌────────┐
│  S501  │
└────────┘
    │
┌────────┐
│  S502  │
└────────┘
    │
┌────────┐
│  S503  │
└────────┘
    │
┌────────┐
│  S504  │
└────────┘
    │
┌────────┐
│  S505  │
└────────┘
```

```
┌────────┐
│  S509  │
└────────┘
    │
┌────────┐
│  S510  │
└────────┘
    │
┌────────┐
│  S511  │
└────────┘
    │
┌────────┐
│  S508  │
└────────┘
```

**Beschreibung**

Die Erfindung betrifft ein Verfahren zum Betreiben einer Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordneten Sensorvorrichtung zur Erfassung von einem ersten Kältemitteldruck und/oder einer ersten Kältemitteltemperatur; einer hochdruckseitig stromabwärts von dem Kältemittelverdichter angeordneten Sensorvorrichtung zur Erfassung von einem zweiten Kältemitteldruck und/oder einer zweiten Kältemitteltemperatur.

Aus dem Stand der Technik sind verschiedene Verfahren zum Betrieb von Kälteanlagen von Kraftfahrzeugen bekannt. Es wird hierzu beispielsweise auf folgende Druckschriften hingewiesen: DE 10 2019 212 503 A1 und DE 10 2008 038 429 A1.

Komplexe Kältemittelkreisläufe insbesondere in elektrisch angetriebenen Kraftfahrzeugen weisen eine hohe Anzahl an Verschaltungsvariationen auf. Diese Verschaltungen, die auch als Betriebsmodi bezeichnet werden könne, bedingen unterschiedliche Lastsituationen und dadurch unterschiedliche Bedarfe an Kältemittelmassenströmen. Eine Erhöhung eines Kältemittelmassenstroms, insbesondere mittels Erhöhen einer Drehzahl des Kältemittelverdichters, kann unter bestimmten Umständen zu einer Verringerung der Effizienz führen bei gleichzeitiger Nichterhöhung der Kälteleistung. Dies wird insbesondere verursacht durch übermäßige Druckverluste in den Bauteilen auf der Niederdruckseite bzw. Saugseite der Kälteanlage. Ferner weisen (komplexere) Kälteanlagen mit Wärmepumpenfunktion in der Regel einen gesonderten Temperatursensor nach dem Verdampfer auf, was zu erhöhten Kosten und Bauraumbedarf führt.

Die der Erfindung zu Grunde liegende Aufgabe wird darin gesehen, ein Verfahren zum Betreiben einer Kälteanlage anzugeben, bei dem die obigen Nachteile vermieden werden können.

Diese Aufgabe wird gelöst durch ein Verfahren und eine Kälteanlage mit den Merkmalen des jeweiligen unabhängigen Patentanspruchs. Vorteilhafte Ausgestaltungen mit zweckmäßigen Weiterbildungen sind in den abhängigen Patentansprüchen angegeben.

Vorgeschlagen wird also ein Verfahren zum Betreiben einer Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordnete Sensorvorrichtung zur Erfassung von einem ersten Kältemitteldruck und/oder einer ersten Kältemitteltemperatur; eine hochdruckseitig stromabwärts von dem Kältemittelverdichter angeordneten Sensorvorrichtung zur Erfassung von einem zweiten Kältemitteldruck und/oder einer zweiten Kältemitteltemperatur, wobei das Verfahren folgende Schritte aufweist:

Erfassen des ersten Kältemitteldrucks oder/und der ersten Kältemitteltemperatur;
Erfassen des zweiten Kältemitteldrucks oder/und der zweiten Kältemitteltemperatur;
Erfassen einer Drehzahl des Kältemittelverdichters;
Bestimmen eines Kältemittelliefergrads basierend auf dem Druckverhältnis von ersten Kältemitteldruck und zweiten Kältemitteldruck und der Drehzahl des Kältemittelverdichters;
Bestimmen eines Kältemittelmassenstroms basierend auf dem Kältemittelliefergrad.

Das Verfahren kann ferner den Schritt aufweisen: Bestimmen von Kältemittel-Teilmassenströmen in Kältemittelabschnitten mit jeweils einem Wärme aufnehmenden Wärmeübertrager, insbesondere mit einem Verdampfer und mit einem Chiller, in Abhängigkeit von erfassten Öffnungsquerschnitten von den Wärmeübertragern vorgeschalteten Expansionsorganen.

Dabei kann in einem Dual-Kühlbetrieb, als ein möglicher Betriebszustand der Kälteanlage, in dem der Verdampfer und der Chiller von Kältemittel durchströmt werden, eine Überhitzung nach dem Verdampfer eingestellt werden, wobei

durch das dem Chiller vorgeschaltete Expansionsorgan ein Hochdruck nach Gaskühler oder eine Unterkühlung nach Kondensator eingestellt wird,
durch das dem Verdampfer vorgeschaltete Expansionsorgan ein Ist-Kältemittelmassenstrom am Verdampfer eingestellt wird, und
durch den Kältemittelverdichter eine Lufttemperatur nach Verdampfer oder/und eine Kühlmitteltemperatur nach Chiller eingestellt wird.

Ferner kann bei dem Verfahren ein Soll-Kältemittelmassenstrom in Abhängigkeit von einer angenäherten Überhitzung am Chiller und einer am Verdampfer anliegenden Leistung bestimmt werden, so dass durch das dem Verdampfer vorgeschaltete Expansionsorgan der Ist-Kältemittelmassenstrom am Verdampfer auf den Soll-Kältemittelmassenstrom einstellbar ist.

Bei dem Verfahren kann für jeden Betriebszustand der Kälteanlage, insbesondere Kühlbetrieb, Heizbetrieb, Reheat-Betrieb, ein zugeordneter maximaler Kältemittelmassenstrom verwendet werden und die Drehzahl des Kältemittelverdichters in dem betreffenden Betriebszustand in Abhängigkeit von dem zugeordneten maximalen Kältemittelmassenstrom begrenzt werden.

Somit kann mittels des vorgeschlagenen Verfahrens eine verschaltungsabhängige bzw. vom Betriebsmodus abhängige Gesamtmassenstromlimitierung erreicht werden, wobei insbesondere üblicherweise in der Kälteanlage vorhandene Sensorik genutzt wird.

Der Kältemittelmassenstrom kann beispielweise wie folgt berechnet werden:

$$mKM = \rho KM \cdot \lambda KV \cdot Vhub \cdot nKV$$

mit

| | |
|---|---|
| mKM | Kältemittelmassenstrom |
| $\rho$KM | Dichte des Kältemittels |
| $\lambda$KV | Liefergrad des Kältemittelverdichters |
| Vhub | Hubvolumen des Kältemittelverdichters |
| nKV | Drehzahl des Kältemittelverdichters |

Vorgeschlagen wird ferner eine Kälteanlage mit Wärmepumpenfunktion für ein Kraftfahrzeug mit zumindest teilweise elektrischem Antrieb, wobei die Kälteanlage aufweist: einen Kältemittelverdichter; einen ersten Wärmeübertrager, insbesondere Gaskühler oder Kondensator; wenigstens einen weiteren Wärmeübertrager, insbesondere einen Verdampfer oder/und einen Chiller oder/und ein Heizregister; eine niederdruckseitig stromaufwärts von dem Kältemittelverdichter angeordnete Sensorvorrichtung zur Erfassung von einem ersten Kältemitteldruck und/oder einer ersten Kältemitteltemperatur; eine hochdruckseitig stromabwärts von dem Kältemittelverdichter angeordnete Sensorvorrichtung zur Erfassung von einem zweiten Kältemitteldruck und/oder einer zweiten Kältemitteltemperatur; und eine Steuereinheit, die dazu eingerichtet ist, das oben beschriebene Verfahren durchzuführen.

Ein Kraftfahrzeug mit zumindest teilweise elektrischem Antrieb, insbesondere auch ein reines Elektrofahrzeug, kann mit einer oben beschriebenen Kälteanlage ausgeführt sein, die insbesondere gemäß dem oben beschriebenen Verfahren betreibbar ist.

Weitere Vorteile und Einzelheiten der Erfindung ergeben sich aus der nachfolgenden Beschreibung von Ausführungsformen unter Bezugnahme auf die Figuren. Dabei zeigt:

Fig. 1    eine vereinfachte und schematische Darstellung einer Kälteanlage eines Kraftfahrzeugs;
Fig. 2    eine vereinfachte Darstellung eines Verfahrens zum Betreiben einer Kälteanlage.

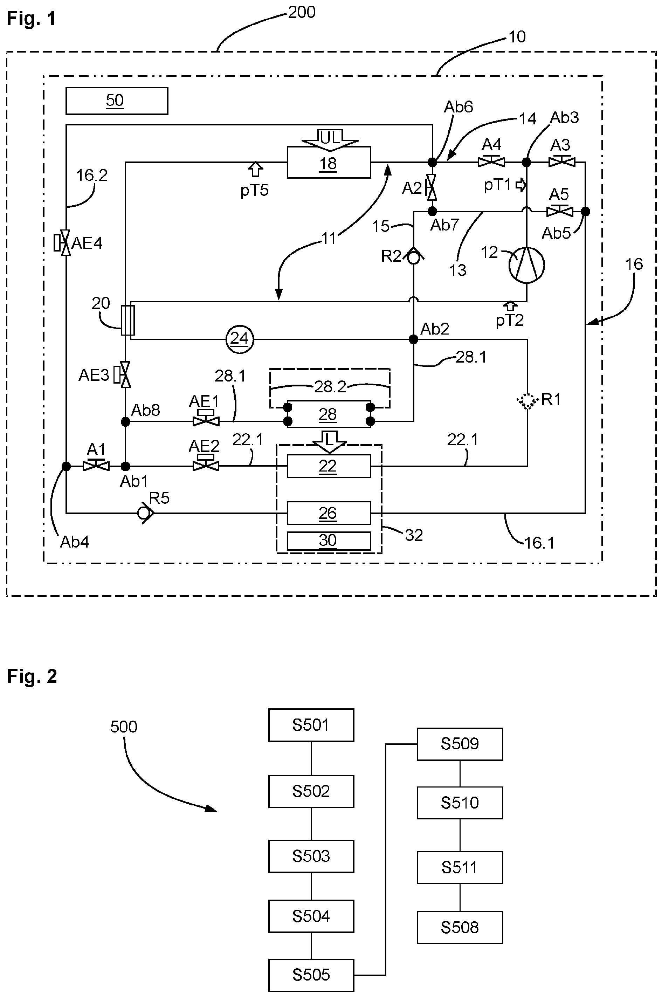

In Fig. 1 ist eine Ausführungsform einer Kälteanlage 10 für ein Kraftfahrzeug schematisch und vereinfacht dargestellt. Die Kälteanlage 10 umfasst einen Kältemittelkreislauf 11, der sowohl in einem Kälteanlagenbetrieb (kurz auch AC-Betrieb genannt), als auch in einem Wärmepumpenmodus betrieben werden kann.

Die Kälteanlage 10 umfasst in der gezeigten Ausführungsform einen Kältemittelverdichter 12, einen äußeren Wärmeübertrager 18, einen inneren Wärmeübertrager 20, einen Verdampfer 22 und einen Akkumulator bzw. Kältemittelsammler 24. Der äußere Wärmeübertrager 18 kann als Kondensator oder Gaskühler ausgebildet sein. Insbesondere ist der äußere Wärmeübertrager 18 in der dargestellten Ausführungsform bidirektional durchströmbar.

Der Verdampfer 22 ist hier beispielhaft als Frontverdampfer für ein Fahrzeug gezeigt. Der Verdampfer 22 steht stellvertretend auch für weitere in einem Fahrzeug mögliche Verdampfer, wie beispielsweise Fondverdampfer, die strömungstechnisch parallel zueinander angeordnet sein können. Mit anderen Worten umfasst die Kälteanlage 10 also wenigstens einen Verdampfer 22.

Stromabwärts des Verdichters 12 ist ein Absperrventil A4 angeordnet. Stromaufwärts des Verdampfers 22 ist ein Expansionsventil AE2 vorgesehen.

Im Rahmen dieser Beschreibung wird in dem gesamten Kältemittelkreislauf 11 der Kälteanlage 10 der Abschnitt vom Verdichter 12 zum äußeren Wärmeübertrager 18, zum inneren Wärmeübertrager 20 und zum Verdampfer 22 als Primärstrang 14 bezeichnet.

Die Kälteanlage 10 umfasst weiter ein Heizregister 26 (auch als Heizkondensator oder Heizgaskühler bezeichnet). Stromaufwärts des Heizregisters 26 ist ein Absperrventil A3 angeordnet. Stromabwärts des Heizregisters 26 ist ein Absperrventil A1 angeordnet. Ferner ist stromabwärts des Heizregisters 26 ein Expansionsventil AE4 angeordnet.

Im Rahmen dieser Beschreibung wird in dem gesamten Kältemittelkreislauf der Kälteanlage 10 der Abschnitt vom Verdichter 12 zum Heizregister 26, zum Expansionsventil AE4 und zu einem Abzweig Ab2 als Sekundärstrang 16 bezeichnet. Der Sekundärstrang 16 umfasst einen Heizzweig 16.1, der sich von dem Absperrventil A3 über das Heizregister 26 zum Absperrventil A1 erstreckt. Weiter umfasst der Sekundärstrang 16 einen Nachheizzweig bzw. Reheat-Zweig 16.2, der stromaufwärts mit dem Heizregister 26 und stromabwärts mit dem äußeren Wärmeübertrager 18 fluidverbindbar ist. Dabei mündet der Sekundärstrang 16 bzw. der Reheat-Zweig 16.2 bei einem Abzweigpunkt Ab2 in den Primärstrang 14.

Die Kälteanlage 10 umfasst einen weiteren Verdampfer bzw. Chiller 28. Der Chiller 28 ist strömungstechnisch parallel zum Verdampfer 22 vorgesehen. Der Chiller 28 kann beispielsweise zur Kühlung einer elektrischen Komponente des Fahrzeugs dienen, aber auch zur Realisierung einer Wasser-Wärmepumpenfunktion unter Nutzung der Abwärme von wenigstens einer elektrischen Komponente. Dem Chiller 28 ist stromaufwärts ein Expansionsventil AE1 vorgeschaltet.

Die Kälteanlage 10 kann auch ein elektrisches Heizelement 30 aufweisen, das beispielsweise als Hochvolt-PTC-Heizelement ausgeführt ist. Das elektrische Heizelement 30 dient als Zusatzheizer für einen in den Fahrzeuginnenraum geführten Zuluftstrom L. Dabei kann das elektrische Heizelement 30 zusammen mit dem Heizregister 26 und dem Verdampfer 22 in einem Klimagerät 32 untergebracht sein. Dabei kann das elektrische Heizelement 30 dem Heizregister 26 nachgeschaltet angeordnet sein.

Die Kälteanlage 10 weist eine niederdruckseitig stromaufwärts von dem Kältemittelverdichter 12 angeordnete Sensorvorrichtung pT2 zur Erfassung von einem ersten Kältemitteldruck und/oder einer ersten Kältemitteltemperatur auf. Ferner weist die Kälteanlage 10 eine hochdruckseitig stromabwärts von dem Kältemittelverdichter 12 angeordnete Sensorvorrichtung pT1 zur Erfassung von einem zweiten Kältemitteldruck und/oder einer zweiten Kältemitteltemperatur.

Die hier beispielhaft dargestellte Kälteanlage 10 mit Wärmepumpenfunktion ist insbesondere für ein Kraftfahrzeug 200, das hier vereinfacht als gestricheltes Rechteck dargestellt ist, mit zumindest teilweise elektrischem Antrieb vorgesehen.

In der Fig. 1 sind ferner optionale Rückschlagventile Rn (n = ganze Zahl) ersichtlich. Ferner kann die Kälteanlage auch weitere, hier nicht dargestellte Sensorvorrichtungen aufweisen.

Die Kälteanlage 10 kann in unterschiedlichen Modi betrieben werden, die nachfolgend kurz beschrieben werden.

Im AC-Betrieb des Kältemittelkreislaufs 11 strömt das auf Hochdruck verdichtete Kältemittel ausgehend von dem Kältemittelverdichter 12 bei offenem Absperrventil A4 in den äußeren Wärmeübertrager 18. Von dort strömt es zu dem Hochdruckabschnitt des inneren Wärmeübertragers 20 und dem vollständig geöffneten Expansionsventil AE3. Über einen Abzweigpunkt Ab1 kann das Kältemittel zum Expansionsventil AE2 und in den Innenraum-Verdampfer 22 strömen (Verdampferabschnitt 22.1). Parallel oder alternativ kann das Kältemittel über einen Abzweigpunkt Ab4 und das Expansionsventil AE1 in den Chiller 28 strömen (Chillerabschnitt 28.1). Aus dem Verdampfer 22 oder/und dem Chiller 28 strömt das Kältemittel niederdruckseitig in den Sammler 24 und durch den Niederdruckabschnitt des inneren Wärmeübertragers 20 zurück zum Verdichter 12.

In dem AC-Betrieb ist der Heizzweig 16.1 bzw. der Sekundärstrang 16 mittels des Absperrventils A3 abgesperrt, so dass heißes Kältemittel nicht durch das Heizregister 26 strömen kann. Zur Rückholung von Kältemittel aus dem inaktiven Heizzweig 16.1 kann das als Absperrventil ausgebildete Absperrorgan A5 geöffnet werden, so dass das Kältemittel über das Absperrorgan A5 und das Rückschlagventil R2, bei gleichzeitig geschlossenem Absperrorgan A2, in Richtung des Sammlers 24 strömen kann.

Im Heizbetrieb des Kältemittelkreislaufs 11 wird das Absperrventil A4 geschlossen und das Absperrventil A3 geöffnet, so dass heißes Kältemittel in den Heizzweig 16.1 strömen kann.

Zur Durchführung der Heizfunktion mittels des Chillers 28 zur Realisierung eines Wasser-Wärmepumpenbetriebs strömt das mittels des Kältemittelverdichters 12 verdichtete Kältemittel über das geöffnete Absperrventil A3 in das Heizregister 26. Am Heizregister 26 wird Wärme an einen in den Fahrzeuginnenraum geführten Zuluftstrom L abgegeben. Das Kältemittel strömt anschließend über das geöffnete Absperrventil A1 und den Abzweigpunkt Ab1. Es wird mittels des Expansionsventils AE1 in den Chiller 28 zur Aufnahme von Abwärme der in einem Kühlmittelkreislauf 28.2 angeordneten elektrischen und/oder elektronischen Komponenten entspannt. Bei dieser Heizfunktion sind die Expansionsventile AE3 und AE4 geschlossen, das Absperrventil A5 geschlossen und das Absperrventil A2 geöffnet. Dabei kann über das Absperrventil A2 im Wasser-Wärmepumpenbetrieb ausgelagertes Kältemittel aus einem Bidirektionalzweig 14.1 bzw. dem Primärstrang 14 abgesaugt und über das Rückschlagventil R2 dem Sammler 24 zugeführt werden.

Zur Durchführung der Heizfunktion mittels des äußeren Wärmeübertragers 18 als Wärmepumpenverdampfer strömt das mittels des Kältemittelverdichters 12 verdichtete Kältemittel über das geöffnete Absperrventil A3 zur Abgabe von Wärme an einen Zuluftstrom L in das Heizregister 26. Anschließend wird es über das geöffnete Absperrventil A1 mittels des Expansionsventils AE3 in den äußeren Wärmeübertrager 18 zur Aufnahme von Wärme aus der Umgebungsluft entspannt. Danach strömt das Kältemittel über einen Wärmepumpenrückführzweig 15 zum Sammler 24 und zurück zum Kältemittelverdichter 12. Die Expansionsventile AE1, AE2 und AE4 bleiben dabei, ebenso wie das Absperrventil A5, geschlossen.

Eine indirekte Dreiecksschaltung kann dadurch realisiert werden, dass bei geöffnetem Absperrventil A1 das von dem Kältemittelverdichter 12 verdichtete Kältemittel mittels des Expansionsventils AE1 in den Chiller 28 entspannt wird, wobei gleichzeitig kühlmittelseitig, also in dem Kühlmittelkreislauf 28.2 kein Massenstrom erzeugt wird, also bspw. das als Kühlmittel verwendete Fluid, wie etwa Wasser oder Wasser-Glykol-Gemisch, auf der Kühlmittelseite des Chillers 28 stehen bleibt bzw. der Chiller 28 nicht aktiv von Kühlmittel durchströmt wird. Die Expansionsventile AE2, AE3 und AE4 bleiben bei dieser Schaltvariante geschlossen.

Bei einem Nachheiz- bzw.- Reheat-Betrieb wird der in den Fahrzeuginnenraum zugeführte Zuluftstrom L mittels des Verdampfers 22 zunächst gekühlt und damit entfeuchtet. Mit der auf das Kältemittel durch Verdampfung und Entfeuchtung übertragenen Wärme sowie der dem Kältemittel über den Verdichter 12 zugeführten Wärme kann der Zuluftstrom L mittels des Heizregisters 26 vollständig oder zumindest teilweise wieder erwärmt werden.

In Fig. 2 ist vereinfacht ein Verfahren 500 zum Betreiben einer oben beschriebenen Kälteanlage 10 gezeigt, wobei das Verfahren 500 insbesondere folgende Schritte aufweist.

Gemäß einem Schritt S501 erfolgt ein Erfassen des ersten Kältemitteldrucks oder/und der ersten Kältemitteltemperatur mittels der Sensorvorrichtung pT2.

Gemäß einem Schritt S502 erfolgt ein Erfassen des zweiten Kältemitteldrucks oder/und der zweiten Kältemitteltemperatur mittels der Sensorvorrichtung pT1.

In einem Schritt S503 wird eine Drehzahl des Kältemittelverdichters 12 erfasst.

Gemäß einem Schritt S504 erfolgt ein Bestimmen eines Kältemittelliefergrads basierend auf dem Druckverhältnis von ersten Kältemitteldruck und zweiten Kältemitteldruck und der Drehzahl des Kältemittelverdichters.

Gemäß einem Schritt S505 erfolgt ein Bestimmen eines Kältemittelmassenstroms basierend auf dem in S504 bestimmten Kältemittelliefergrad.

Bei dem Verfahren 500 kann bei einem optionalen Schritt S509 ein Bestimmen von Kältemittel-Teilmassenströmen in Kältemittelabschnitten mit jeweils einem Wärme aufnehmenden Wärmeübertrager, insbesondere mit dem Verdampfer 22 und mit dem Chiller 28, in Abhängigkeit von erfassten Öffnungsquerschnitten von den den Wärmeübertragern vorgeschalteten Expansionsorganen AE2, AE1.

Bei dem Verfahren 500 kann gemäß einem optionalen Schritt S510 insbesondere in einem Dual-Kühlbetrieb, in dem der Verdampfer 22 und der Chiller 28 (parallel) von Kältemittel durchströmt werden, eine Überhitzung nach dem Verdampfer eingestellt wird, wobei

durch das dem Chiller 28 vorgeschaltete Expansionsorgan AE1 ein Hochdruck nach Gaskühler 18 oder eine Unterkühlung nach Kondensator eingestellt wird,
durch das dem Verdampfer 22 vorgeschaltete Expansionsorgan AE2 ein Ist-Kältemittelmassenstrom am Verdampfer 22 eingestellt wird, und
durch den Kältemittelverdichter 12 eine Lufttemperatur nach Verdampfer 22 oder/und eine Kühlmitteltemperatur nach Chiller 28 eingestellt wird.

Bei dem Verfahren 500 kann gemäß einem optionalen Schritt S511 ein Soll-Kältemittelmassenstrom in Abhängigkeit von einer angenäherten Überhitzung am Chiller 28 und einer am Verdampfer 22 anliegenden Leistung bestimmt werden, so dass durch das dem Verdampfer 22 vorgeschaltete Expansionsorgan AE2 der Ist-Kältemittelmassenstrom am Verdampfer 22 auf den Soll-Kältemittelmassenstrom einstellbar ist.

Bei dem Verfahren 500 kann für jeden der oben beschriebenen Betriebszustände der Kälteanlage 10, insbesondere Kühlbetrieb, Heizbetrieb, Reheat-Betrieb, ein zugeordneter maximaler Kältemittelmassenstrom verwendet werden, so dass gemäß einem Schritt S508 die Drehzahl des Kältemittelverdichters in dem betreffenden Betriebszustand in Abhängigkeit von dem zugeordneten maximalen Kältemittelmassenstrom begrenzt wird.

Es wird darauf hingewiesen, dass in der Fig. 2 die beschriebenen Schritte des Verfahrens 500 vereinfacht als Abfolge dargestellt sind, auch wenn diese Schritte auch (zeitlich) parallel zueinander oder sogar gleichzeitig ausgeführt werden können.

Zur Durchführung des oben beschriebenen Verfahrens 500 kann die Kälteanlage 10 eine Steuereinheit 50 aufweisen.

## Patentansprüche

1. Verfahren (500) zum Betreiben einer Kälteanlage (10) mit Wärmepumpenfunktion für ein Kraftfahrzeug (200) mit zumindest teilweise elektrischem Antrieb, wobei die Kälteanlage (10) aufweist:

   einen Kältemittelverdichter (12),
   einen ersten Wärmeübertrager (18), insbesondere Gaskühler oder
   Kondensator;
   wenigstens einen weiteren Wärmeübertrager (22; 28;26), insbesondere einen Verdampfer (22) oder/und einen Chiller (28) oder/und ein Heizregister (26);
   eine niederdruckseitig stromaufwärts von dem Kältemittelverdichter (12) angeordnete Sensorvorrichtung (pT2) zur Erfassung von einem ersten Kältemitteldruck und/oder einer ersten Kältemitteltemperatur;
   eine hochdruckseitig stromabwärts von dem Kältemittelverdichter (12) angeordnete Sensorvorrichtung (pT1) zur Erfassung von einem zweiten Kältemitteldruck und/oder einer zweiten Kältemitteltemperatur, wobei das Verfahren folgende Schritte aufweist:

   Erfassen (S501) des ersten Kältemitteldrucks oder/und der ersten Kältemitteltemperatur;
   Erfassen (S502) des zweiten Kältemitteldrucks oder/und der zweiten Kältemitteltemperatur;
   Erfassen (S503) einer Drehzahl des Kältemittelverdichters;
   Bestimmen (S504) eines Kältemittelliefergrads basierend auf dem Druckverhältnis von ersten Kältemitteldruck und zweiten Kältemitteldruck und der Drehzahl des Kältemittelverdichters;
   Bestimmen (S505) eines Kältemittelmassenstroms basierend auf dem Kältemittelliefergrad.

2. Verfahren (500) nach Anspruch 1, ferner umfassend den Schritt:

Bestimmen (S509) von Kältemittel-Teilmassenströmen in Kältemittelabschnitten mit jeweils einem Wärme aufnehmenden Wärmeübertrager, insbesondere mit einem Verdampfer (22) und mit einem Chiller (28), in Abhängigkeit von erfassten Öffnungsquerschnitten von den Wärmeübertragern vorgeschalteten Expansionsorganen (AE1, AE2).

3. Verfahren (500) nach Anspruch 2, wobei bei einem Dual-Kühlbetrieb, in dem der Verdampfer (22) und der Chiller (28) von Kältemittel durchströmt werden, eine Überhitzung nach dem Verdampfer (22) eingestellt wird (S510).

4. Verfahren (500) nach Anspruch 3, wobei

   durch das dem Chiller (28) vorgeschaltete Expansionsorgan (AE1) ein Hochdruck nach Gaskühler (18) oder eine Unterkühlung nach Kondensator eingestellt wird,
   durch das dem Verdampfer (22) vorgeschaltete Expansionsorgan (AE2) ein Ist-Kältemittelmassenstrom am Verdampfer (22) eingestellt wird, und
   durch den Kältemittelverdichter (12) eine Lufttemperatur nach Verdampfer (22) oder/und eine Kühlmitteltemperatur nach Chiller (28) eingestellt wird.

5. Verfahren (500) nach Anspruch 4, wobei ein Soll-Kältemittelmassenstrom im Abhängigkeit von einer angenäherten Überhitzung am Chiller (28) und einer am Verdampfer (22) anliegenden Leistung bestimmt wird (S511), so dass durch das dem Verdampfer (22) vorgeschaltete Expansionsorgan (AE2) der Ist-Kältemittelmassenstrom am Verdampfer (22) auf den Soll-Kältemittelmassenstrom einstellbar ist.

6. Kälteanlage (10) mit Wärmepumpenfunktion für ein Kraftfahrzeug (200) mit zumindest teilweise elektrischem Antrieb, wobei die Kälteanlage (10) aufweist:

   einen Kältemittelverdichter (12),
   einen ersten Wärmeübertrager (18), insbesondere Gaskühler oder
   Kondensator;
   wenigstens einen weiteren Wärmeübertrager (22; 28; 26), insbesondere einen Verdampfer (22) oder/und einen Chiller (28) oder/und ein Heizregister (26);
   einer niederdruckseitig stromaufwärts von dem Kältemittelverdichter (12) angeordneten Sensorvorrichtung (pT2) zur Erfassung von einem ersten Kältemitteldruck und/oder einer ersten Kältemitteltemperatur;
   einer hochdruckseitig stromabwärts von dem Kältemittelverdichter (12) angeordneten Sensorvorrichtung (pT1) zur Erfassung von einem zweiten Kältemitteldruck und/oder einer zweiten Kältemitteltemperatur; und
eine Steuereinheit (50), die dazu eingerichtet ist, das Verfahren (500) gemäß einem der vorhergehenden Ansprüche durchzuführen.

**Fig. 1**

**Fig. 2**

Europäisches Patentamt
European Patent Office
Office européen des brevets

# EUROPÄISCHER RECHERCHENBERICHT

Nummer der Anmeldung

EP 25 19 0056

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2023/107888 A1 (SHIDORE NEERAJ S [US] ET AL) 6. April 2023 (2023-04-06) * das ganze Dokument * ----- | 1-6 | INV. B60H1/32 |
| X | US 2023/022907 A1 (BATEMAN KALE [CA]) 26. Januar 2023 (2023-01-26) * das ganze Dokument * ----- | 1-6 | |
| X | DE 10 2019 119751 B3 (PORSCHE AG [DE]) 16. Juli 2020 (2020-07-16) * das ganze Dokument * ----- | 1-6 | |
| A | WO 2022/106272 A1 (AUDI AG [DE]) 27. Mai 2022 (2022-05-27) * das ganze Dokument * ----- | 1-6 | |
| A | DE 10 2013 021360 B4 (AUDI AG [DE]) 8. Dezember 2022 (2022-12-08) * das ganze Dokument * ----- | 1-6 | |
| A | EP 1 775 533 A2 (STIEBEL ELTRON GMBH & CO KG [DE]) 18. April 2007 (2007-04-18) * das ganze Dokument * ----- | 1-6 | RECHERCHIERTE SACHGEBIETE (IPC) B60H |

Der vorliegende Recherchenbericht wurde für alle Patentansprüche erstellt

| Recherchenort | Abschlußdatum der Recherche | Prüfer |
|---|---|---|
| München | 5. Januar 2026 | Gumbel, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 25 19 0056

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-01-2026

| Im Recherchenbericht angeführtes Patentdokument | Datum der Veröffentlichung | Mitglied(er) der Patentfamilie | Datum der Veröffentlichung |
|---|---|---|---|
| US 2023107888 A1 | 06-04-2023 | CN 115929640 A<br>DE 102022122353 A1<br>US 2023107888 A1 | 07-04-2023<br>06-04-2023<br>06-04-2023 |
| US 2023022907 A1 | 26-01-2023 | CN 115614916 A<br>DE 102022110239 A1<br>US 2023022907 A1 | 17-01-2023<br>19-01-2023<br>26-01-2023 |
| DE 102019119751 B3 | 16-07-2020 | KEINE | |
| WO 2022106272 A1 | 27-05-2022 | CN 116390863 A<br>DE 102020130912 A1<br>EP 4248150 A1<br>US 2023322045 A1<br>WO 2022106272 A1 | 04-07-2023<br>25-05-2022<br>27-09-2023<br>12-10-2023<br>27-05-2022 |
| DE 102013021360 B4 | 08-12-2022 | KEINE | |
| EP 1775533 A2 | 18-04-2007 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102019212503 A1
- DE 102008038429 A1